# EUROPÄISCHE PATENTSCHRIFT

(11) **EP 3 222 954 B1**
(45) Veröffentlichungstag und Bekanntmachung des Hinweises auf die Patenterteilung: **10.07.2019**
(21) Anmeldenummer: 17156929.6
(22) Anmeldetag: 20.02.2017
(51) Int. Cl.: F28D 1/04

(54) **MONTAGEVORRICHTUNG**
MOUNTING DEVICE
DISPOSITIF DE MONTAGE

(30) Priorität: 24.03.2016 DE 202016101643 U
(43) Veröffentlichungstag der Anmeldung: 27.09.2017
(73) Patentinhaber: Beton Röser GmbH & Co. KG, 74423 Obersontheim (DE)
(72) Erfinder: Röser, Wilfried, 74423 Obersontheim (DE)
(74) Vertreter: Grauel, Andreas

(56) Entgegenhaltungen:
- EP-A2- 2 048 073
- US-A- 4 141 426

## Beschreibung

### Technisches Gebiet

Die Erfindung betrifft eine Montagevorrichtung für die Montage, insbesondere von Kühlern, für ein Motorrad und ein Motorrad mit mit einer Montagevorrichtung montierten Kühlern.

### Stand der Technik

Im Stand der Technik sind Motorräder bekannt, die einen anteilig luftgekühlten und anteilig wassergekühlten Motor aufweisen, wobei in der Front des Motorrads ein Kühler im Luftstrom angeordnet ist, welcher in einem Kühlkreislauf mit dem Motor fluidangeordnet ist, so dass das im Kühler durch den Luftstrom gekühlte Fluid den Motor kühlen kann. Dabei kann der Anteil der Luftkühlung beispielsweise etwa 66% aufweisen und der Anteil der Wasserkühlung etwa 34%.

Auch sind im Stand der Technik Motorräder bekannt, die einen anteilig luftgekühlten und anteilig ölgekühlten Motor aufweisen, wobei in der Front des Motorrads ein Kühler im Luftstrom angeordnet ist, welcher in einem Ölkreislauf mit dem Motor fluidangeordnet ist, so dass das im Kühler durch den Luftstrom gekühlte Öl den Motor kühlen kann. Dabei kann der Anteil der Luftkühlung beispielsweise etwa 78% aufweisen und der Anteil der Ölkühlung etwa 22%.

Dabei zeigt sich dennoch, dass einzelne Motorräder in speziellen Betriebssituationen eine nicht ganz ausreichende Kühlung aufweisen, weil die Kühlleistung des serienmäßig verbauten Kühlers in diesen speziellen Betriebssituationen nicht ausreichend ist.

Die alternative ist, den serienmäßig verbauten Kühler gegen einen leistungsfähigeren Kühler auszutauschen. Dies scheitert meist schon an der Verfügbarkeit eines solchen Kühlers.

Alternativ besteht die Möglichkeit, an dem Motorrad einen zweiten serienmäßigen Kühler zu montieren, der im Ersatzteilhandel erwerblich ist. Dies wird meist durch die engen Bauraumverhältnisse oder durch die langen Leitungswege behindert, wenn der zusätzliche Kühler an einem anderen Montagepunkt am Motorrad montiert wird. Eine gattungsgemässe Montagevorrichtung zur Montage eines ersten Kühlers und eines zweiten Kühlers an einem Motorrad ist aus der EP2048073A bekannt.

### Darstellung der Erfindung. Aufgabe, Lösung. Vorteile

Es ist die Aufgabe der Erfindung, eine Montagevorrichtung für die Montage insbesondere von Kühlern an einem Motorrad und ein Motorrad mit mit einer Montagevorrichtung montierten Kühlern zu schaffen, die einfach und kompakt ausgebildet ist und dennoch eine einfache Montage zumindest zweier Kühler erlaubt.

Diese Aufgabe zur Montagevorrichtung wird mit den Merkmalen von Anspruch 1 gelöst.

Ein Ausführungsbeispiel der Erfindung betrifft eine Montagevorrichtung zur Montage eines ersten Kühlers und eines zweiten Kühlers an einem Motorrad, wobei die Montagevorrichtung einen Grundkörper mit einer ersten Öffnung aufweist, welche von einem ersten Befestigungselement durchgreifbar ist, mittels welchem der erste Kühler und der Grundkörper an einem Befestigungspunkt des Motorrads befestigbar sind, wobei an dem Grundkörper ein zweites Befestigungselement beabstandet von der ersten Öffnung angeordnet ist, mittels welchem der zweite Kühler benachbart zu dem ersten Kühler befestigbar ist. Dadurch kann unterhalb des serienmäßig vorgesehenen ersten Kühlers ein zweiter baugleicher Kühler angeordnet werden, was die Kühlleistung zur Kühlung des Kühlfluids erhöht, was in speziellen Betriebssituationen vorteilhaft ist. Mittels der ersten Öffnung und beispielsweise einer Schraube kann damit sowohl der erste Kühler als auch der Grundkörper an dem Befestigungspunkt beispielsweise des Motorrads befestigt, wie verschraubt, werden.

Wenn im Zusammenhang mit der Erfindung von einem Kühler die Rede ist, so kann dies grundsätzlich ein Luft-Wasser-Kühler für einen Kühlwasserkreislauf sein. Auch kann dies grundsätzlich ein Luft-Öl-Kühler für einen Ölkreislauf sein. Auch kann es ein anderweitiger Kühler sein.

Dabei ist das zweite Befestigungselement ein Bolzen oder ein Gewindebolzen oder eine Schraube. So kann an dem Grundkörper mittels des zweiten Befestigungselements der zweite Kühler befestigt werden, wie beispielsweise verschraubt werden.

Das zweite Befestigungselement ist mit dem Grundkörper verbunden oder mit dem Grundkörper einteilig ausgebildet. So kann erreicht werden, dass die Verbindung zwischen dem Grundkörper und dem zweiten Befestigungselement keinen Montageaufwand benötigt. Weist das zweite Befestigungselement ein Gewinde auf, so kann daran der zweite Kühler aufgesetzt und mit einer Mutter verschraubt werden.

Auch ist es vorteilhaft, wenn das zweite Befestigungselement eine zweite Öffnung mit oder ohne Innengewinde ist. So kann alternativ auch eine Schraube zur Verbindung und Befestigung des zweiten Kühlers verwendet werden.

Ebenso ist es zweckmäßig, wenn in die zweite Öffnung ein Bolzen oder ein Gewindebolzen oder eine Schraube eingeführt ist. Dadurch kann der Grundkörper mit dem zweiten Kühler ebenso verbunden und befestigt werden.

An dem Grundkörper zwischen der ersten Öffnung und dem zweiten Befestigungselement ist eine Aussparung vorgesehen, welche den Querschnitt des Grundkörpers lokal reduziert. Die Aussparung dient dazu, dass von dem ersten Kühler abragende Fluidstutzen nicht mit dem Grundkörper kollidieren. Durch die Aussparung kann der Grundkörper montiert werden, ohne dass es zu Bauraumkollisionen kommt.

Ebenso ist es besonders vorteilhaft, wenn die Aussparung sich von einer Seitenkante des Grundkörpers ausgehend in Richtung zu einer gegenüberliegenden Seitenkante des Grundkörpers erstreckt. Dadurch wird der für beispielsweise Fluidstutzen des ersten Kühlers eingenommene Bauraum freigegeben, wobei die Stabilität des Grundkörpers gewährleistet ist.

So ist es auch vorteilhaft, wenn die Aussparung im Wesentlichen halbkreisförmig ausgebildet ist. Damit kann der für einen Fluidstutzen benötigte Bauraum optimal freigegeben werden, ohne dass es an Ecken einer Aussparung zu Kerbwirkungen kommt.

Diese Aufgabe zum Motorrad wird mit den Merkmalen von Anspruch 1 gelöst.

Ein Ausführungsbeispiel der Erfindung betrifft ein Motorrad mit einer Montagevorrichtung zur Montage eines ersten Kühlers und eines zweiten Kühlers, wobei das Motorrad einen Befestigungspunkt zur Befestigung eines ersten Kühlers aufweist, wobei mittels der Montagevorrichtung ein zweiter Kühler an dem Befestigungspunkt befestigbar ist, wobei die Montagevorrichtung einen Grundkörper mit einer ersten Öffnung aufweist, welche von einem ersten Befestigungselement durchgreifbar ist, mittels welchem der erste Kühler und der Grundkörper an dem Befestigungspunkt befestigbar sind, wobei an dem Grundkörper ein zweites Befestigungselement beabstandet von der ersten Öffnung angeordnet ist, mittels welchem der zweite Kühler benachbart zu dem ersten Kühler befestigbar ist. So können untereinander zumindest zwei Kühler miteinander montiert sein, so dass eine verbesserte Kühlung erreicht werden kann.

Besonders vorteilhaft ist es auch, wenn zwei Befestigungspunkte vorgesehen sind, wobei der erste Kühler an den beiden Befestigungspunkten befestigt ist und dass zwei Montagevorrichtungen vorgesehen sind, die jeweils an den Befestigungspunkten befestigt sind, wobei ein zweiter Kühler an den beiden Montagevorrichtungen befestigt ist. Dadurch kann der jeweilige Kühler an zwei dafür vorgesetzten Stellen befestigt werden, was die Dauerhaltbarkeit der Befestigung verbessert.

Auch ist es vorteilhaft, wenn der erste Kühler und der zweite Kühler untereinander angeordnet sind. Dadurch wird eine günstige Anströmung der zur Kühlung verwendeten Luft erreicht. So ist es besonders vorteilhaft, wenn die Anordnung der Kühler an der Front des Motorrads, wie insbesondere hinter oder unterhalb einer Verkleidung und/oder unterhalb des Scheinwerfers erfolgt.

Auch ist es vorteilhaft, wenn die zumindest eine Montagevorrichtung in Luftströmungsrichtung stromabwärts der Kühler angeordnet ist. Dadurch kann die Montagevorrichtung beispielsweise hinter den Wasserkästen des Kühlers angeordnet werden und stört den Luftstrom durch den Kühler nicht.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Figur 1: eine Ansicht einer erfindungsgemäßen rechtsseitigen Montagevorrichtung,
- Figur 2: eine weitere Ansicht der erfindungsgemäßen rechtsseitigen Montagevorrichtung,
- Figur 3: eine Ansicht einer erfindungsgemäßen linksseitigen Montagevorrichtung,
- Figur 4: eine weitere Ansicht der erfindungsgemäßen linksseitigen Montagevorrichtung,
- Figur 5: eine Ansicht des ersten Kühlers und eines darunter angeordneten zweiten Kühlers,
- Figur 6: eine Ansicht des ersten Kühlers und eines darunter angeordneten zweiten Kühlers mit dargestellten Montagevorrichtungen,
- Figur 7: eine weitere seitliche Ansicht der untereinander angeordneten Kühler,
- Figur 8: eine weitere Ansicht der untereinander angeordneten Kühler,
- Figur 9: eine Ansicht einer Front eines Motorrads mit zwei Kühlern, und
- Figur 10: eine Ansicht der beiden Kühler an der Front des Motorrads mit abgenommener Verkleidung.

### Bevorzugte Ausführung der Erfindung

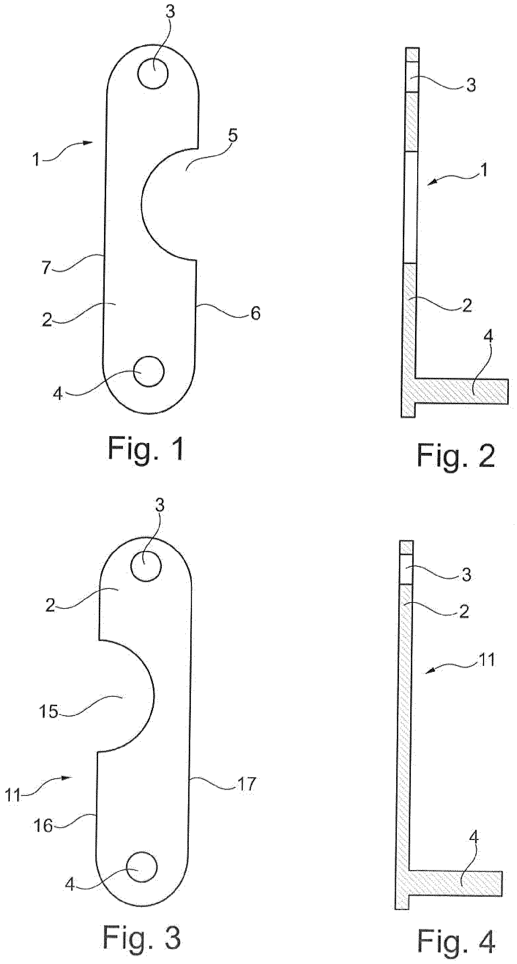

Die Figuren 1 und 2 zeigen jeweils eine Ansicht einer erfindungsgemäßen rechtsseitigen Montagevorrichtung 1 und die Figuren 3 und 4 zeigen jeweils eine Ansicht einer erfindungsgemäßen linksseitigen Montagevorrichtung 11 zur Montage eines ersten Kühlers und eines zweiten Kühlers an einem Motorrad. Dabei kann die Montagevorrichtung 1, 11 gegebenenfalls auch dazu benutzt werden, um andere Aggregate zu befestigen, beispielsweise an einem Kraftfahrzeug.

Die Montagevorrichtung 1, 11 weist einen Grundkörper 2, 12 auf, welcher mit einer ersten Öffnung 3, 13 versehen ist. Die Öffnung 3, 13 ist von einem ersten Befestigungselement durchgreifbar, mittels welchem der erste Kühler und der Grundkörper 2, 12 an einem Befestigungspunkt insbesondere eines Motorrads befestigbar sind.

An dem Grundkörper 2, 12 ist ein zweites Befestigungselement 4, 14 beabstandet von der ersten Öffnung 3, 13 angeordnet, mittels welchem der zweite Kühler benachbart zu dem ersten Kühler befestigbar ist.

Gemäß den Figuren 2 und 4 ist das zweite Befestigungselement 4, 14 ein Bolzen oder ein Gewindebolzen oder eine Schraube. Dadurch kann mittels einer Mutter der zweite Kühler an dem zweiten Befestigungselement 4, 14 verschraubt werden. Bei Verwendung eines Bolzens kann eine anderweitige formschlüssige Verbindung genutzt werden, wie beispielsweise ein Nietprozess.

Das zweite Befestigungselement 4, 14 ist mit dem Grundkörper 2, 12 verbunden. Alternativ kann das zweite Befestigungselement 4, 14 auch mit dem Grundkörper 2, 12 einteilig ausgebildet sein.

In den Figuren 1 und 3 ist zu erkennen, dass an dem Grundkörper 2, 12 zwischen der ersten Öffnung 3, 13 und dem zweiten Befestigungselement 4, 14 eine Aussparung 5, 15 vorgesehen ist, welche den Querschnitt des Grundkörpers 2, 12 lokal reduziert. Dabei erstreckt sich die Aussparung 5, 15 von einer Seitenkante 6, 16 des Grundkörpers 2, 12 ausgehend in Richtung zu einer gegenüberliegenden Seitenkante 7, 17 des Grundkörpers 2, 12.

In den Figuren 1 und 3 ist ebenso zu erkennen, dass die Aussparung 5, 15 jeweils im Wesentlichen halbkreisförmig ausgebildet ist.

Aus den Figuren 1 und 3 ist auch zu erkennen, dass die Aussparung 5 an der rechtsseitigen Montagevorrichtung 1 zur rechten Seite offen ist und dass die Aussparung 15 an der linksseitigen Montagevorrichtung 11 zur linken Seite offen ist. Dies liegt daran, dass dann Anschlussstutzen oder Anschlussschläuche der Kühler außen an dem Grundkörper 2, 12 vorbei geführt werden können.

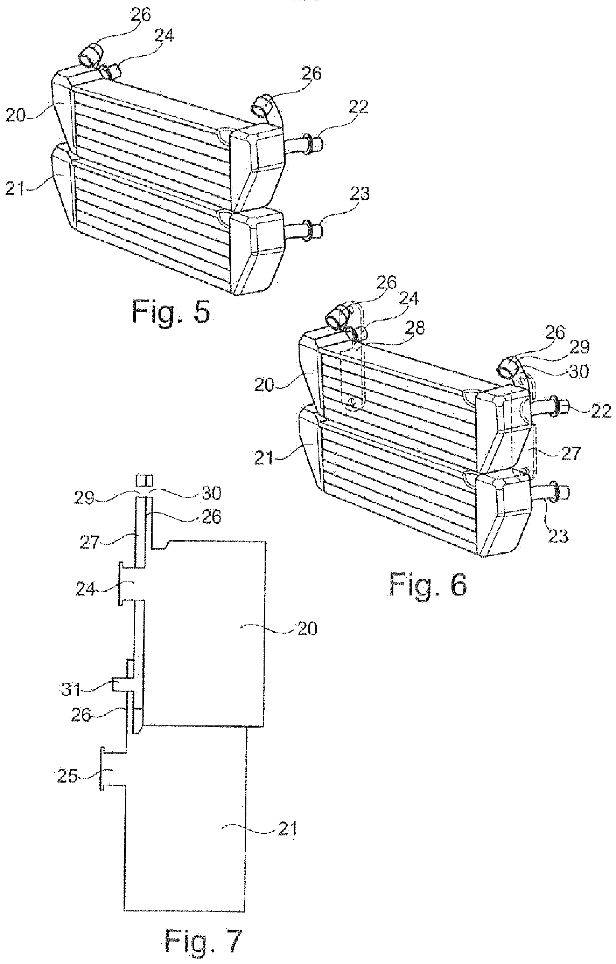

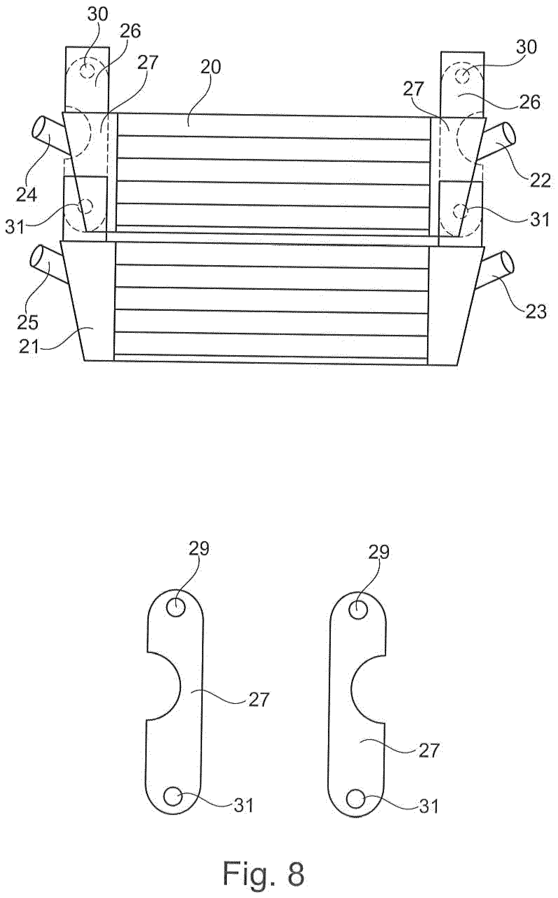

Die Figuren 5 bis 8 zeigen jeweils eine Ansicht eines ersten Kühlers 20 und eines darunter angeordneten zweiten Kühlers 21. An den Kühlern 20, 21 sind jeweils Anschlussstutzen 22, 23, 24, 25 angeordnet, um ein Kühlfluid in den Kühler 20, 21 einzuführen bzw. aus dem Kühler 20, 21 auszuführen. Zur Befestigung der Kühler 20, 21 sind an den Kühlern jeweils Laschen 26 vorgesehen, welche vorzugsweise gelocht sind, um den Kühler damit zu befestigen.

In den Figuren 6, 7 und 8 sind zusätzlich zu den beiden Kühlern 20, 21 auch die beiden Montagevorrichtungen 27, 28 zu erkennen. Dabei ist mit 27 die rechtsseitige Montagevorrichtung und mit 28 die linksseitige Montagevorrichtung bezeichnet. Die obere Öffnung 29 der Montagevorrichtungen 27, 28 fluchtet dabei mit den Öffnungen 30 in den Laschen 26. Dadurch kann der erste Kühler 20 mit der Montagevorrichtung 27 an einem Befestigungspunkt des Motorrads befestigt oder verschraubt werden.

Das am unteren Endbereich der Montagevorrichtung 27, 28 vorgesehene zweite Befestigungselement 31 dient der Befestigung des zweiten Kühlers 21. Es durchgreift die Öffnung der Lasche 26 des zweiten Kühlers, so dass die Montagevorrichtung 27 und der zweite Kühler miteinander verbindbar sind. Im Falle, dass das zweite Befestigungselement ein Gewindebolzen oder eine Schraube ist, kann der zweite Kühler einfach mit der Montagevorrichtung verschraubt werden.

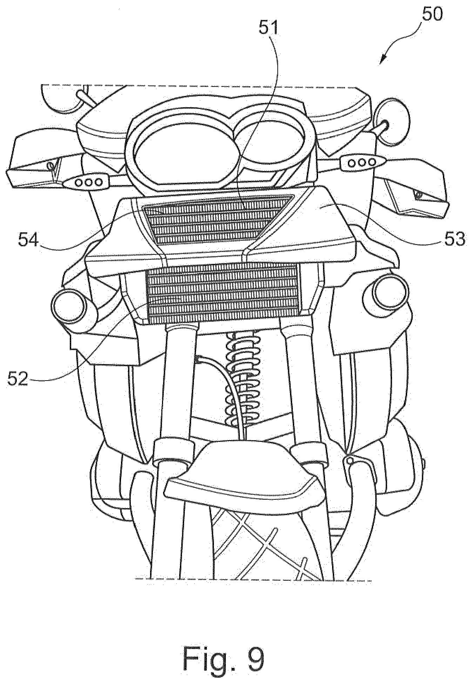

Die Figur 9 zeigt die Front eines Motorrads 50, an welcher zwei Kühler 51, 52 untereinander angeordnet sind. Der erste, obere Kühler 51 ist dabei hinter einer Verkleidung 53 angeordnet, die eine Lufteinlassöffnung 54 aufweist. Der zweite Kühler 52 ist unterhalb des ersten Kühlers 51 angeordnet und ragt unter der Verkleidung 53 hervor.

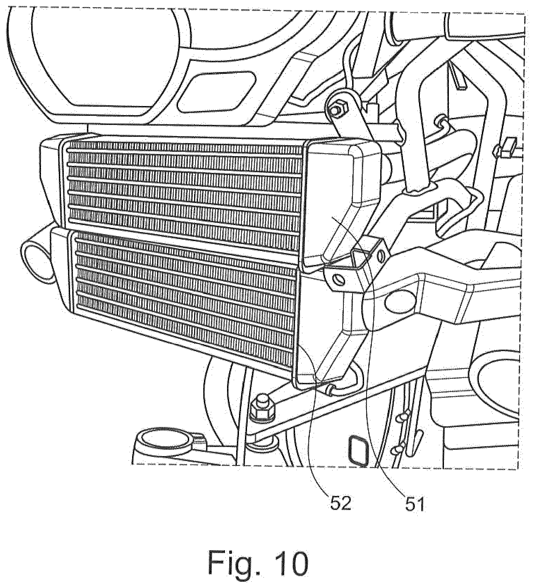

Die Figur 10 zeigt die beiden Kühler 51, 52 bei abgenommener Verkleidung. Es ist zu erkennen, dass mittels der Montagevorrichtung statt eines serienmäßigen Kühlers zwei baugleiche Kühler 51, 52 verbaut werden können.

### Bezugszeichenliste

- 1: Montagevorrichtung
- 2: Grundkörper
- 3: Öffnung
- 4: zweites Befestigungselement
- 5: Aussparung
- 6: Seitenkante
- 7: Seitenkante
- 11: Montagevorrichtung
- 12: Grundkörper
- 13: Öffnung
- 14: zweites Befestigungselement
- 15: Aussparung
- 16: Seitenkante
- 17: Seitenkante
- 20: erster Kühler
- 21: zweiter Kühler
- 22: Anschlussstutzen
- 23: Anschlussstutzen
- 24: Anschlussstutzen
- 25: Anschlussstutzen
- 26: Lasche
- 27: Montagevorrichtung
- 28: Montagevorrichtung
- 29: Öffnung
- 30: Öffnung
- 31: Befestigungselement
- 50: Motorrad
- 51: erster Kühler
- 52: zweiter Kühler
- 53: Verkleidung
- 54: Lufteinlassöffnung

## Patentansprüche

1. Montagevorrichtung zur Montage eines ersten Kühlers und eines zweiten baugleichen Kühlers an einem Motorrad, wobei die Montagevorrichtung einen Grundkörper (2) mit einer ersten Öffnung aufweist, welche von einem ersten Befestigungselement durchgreifbar ist, mittels welchem der erste Kühler und der Grundkörper an einem Befestigungspunkt befestigbar sind, wobei an dem Grundkörper ein zweites Befestigungselement (4) beabstandet von der ersten Öffnung angeordnet ist, mittels welchem der zweite Kühler benachbart zu dem ersten Kühler befestigbar ist, **dadurch gekennzeichnet, dass** das zweite Befestigungselement (4) ein Bolzen oder ein Gewindebolzen oder eine Schraube ist, wobei das zweite Befestigungselement mit dem Grundkörper verbunden oder mit dem Grundkörper einteilig ausgebildet ist, wobei an dem Grundkörper zwischen der ersten Öffnung und dem zweiten Befestigungselement eine Aussparung (5) vorgesehen ist, welche den Querschnitt des Grundkörpers (2) lokal reduziert.

2. Montagevorrichtung nach Anspruch 1, **dadurch gekennzeichnet, dass** die Aussparung (5) sich von einer Seitenkante des Grundkörpers ausgehend in Richtung zu einer gegenüberliegenden Seitenkante des Grundkörpers erstreckt.

3. Montagevorrichtung nach Anspruch 1 oder 2, **dadurch gekennzeichnet, dass** die Aussparung im Wesentlichen halbkreisförmig ausgebildet ist.

4. Motorrad mit einer Montagevorrichtung zur Montage eines ersten Kühlers und eines zweiten baugleichen Kühlers, wobei das Motorrad einen Befestigungspunkt zur Befestigung eines ersten Kühlers aufweist, wobei mittels der Montagevorrichtung gemäß einem der Ansprüche 1 bis 3 ein zweiter Kühler an dem Befestigungspunkt befestigbar ist, wobei die Montagevorrichtung einen Grundkörper (2) mit einer ersten Öffnung (3) aufweist, welche von einem ersten Befestigungselement durchgreifbar ist, mittels welchem der erste Kühler und der Grundkörper an dem Befestigungspunkt befestigbar sind, wobei an dem Grundkörper (2) ein zweites Befestigungselement beabstandet von der ersten Öffnung angeordnet ist, mittels welchem der zweite Kühler benachbart zu dem ersten Kühler befestigbar ist.

5. Motorrad nach Anspruch 4, **dadurch gekennzeichnet, dass** zwei Befestigungspunkte vorgesehen sind, wobei der erste Kühler an den beiden Befestigungspunkten befestigt ist und dass zwei Montagevorrichtungen vorgesehen sind, die jeweils an den Befestigungspunkten befestigt sind, wobei ein zweiter Kühler an den beiden Montagevorrichtungen befestigt ist.

6. Motorrad nach Anspruch 4 oder 5, **dadurch gekennzeichnet, dass** der erste Kühler und der zweite Kühler untereinander angeordnet sind.

7. Motorrad nach einem der vorhergehenden Ansprüche 4 bis 6, **dadurch gekennzeichnet, dass** die zumindest eine Montagevorrichtung in Luftströmungsrichtung stromabwärts der Kühler angeordnet ist.

## Claims

1. A mounting device for mounting a first cooler and a second, structurally identical cooler on a motor cycle, wherein the mounting device has a base body (2) with a first opening through which a first fixation element can reach, by means of which the first cooler and the base body can be fixed to a fixation point, wherein a second fixation element (4) spaced from the first opening is arranged on the base body, by means of which the second cooler can be fixed adjacent to the first cooler, **characterised in that** the second fixation element (4) is a bolt or a threaded bolt or a screw, wherein the second fixation element is connected to the base body or is integrally designed with the base body, wherein a recess (5) is provided on the base body between the first opening and the second fixation element, the recess locally reducing the cross-section of the base body (2).

2. The mounting device according to claim 1, **characterised in that** the recess (5) extends, starting from a side edge of the base body, in the direction to an opposite side edge of the base body.

3. The mounting device according to claim 1 or 2, **characterised in that** the recess is substantially designed in a semi-circular form.

4. A motor cycle with a mounting device for mounting a first cooler and a second, structurally identical cooler, wherein the motor cycle has a fixation point for the fixation of a first cooler, wherein a second cooler can be fixed to the fixation point by means of the mounting device according to one of claims 1 to 3, wherein the mounting device has a base body (2) with a first opening (3) through which a first fixation element can reach, by means of which the first cooler and the base body can be fixed to the fixation point, wherein a second fixation element spaced from the first opening is arranged on the base body (2), by means of which the second cooler can be fixed adjacent to the first cooler.

5. The motor cycle according to claim 4, **characterised in that** two fixation points are provided, wherein the first cooler is fixed to the two fixation points, and **in that** two mounting devices are provided, which are respectively fixed to the fixation points, wherein a second cooler is fixed to the two mounting devices.

6. The motor cycle according to claim 4 or 5, **characterised in that** the first cooler and the second cooler are arranged one below the other.

7. The motor cycle according to one of the preceding claims 4 to 6, **characterised in that** the at least one mounting device is arranged in the air flow direction downstream of the coolers.

## Revendications

1. Dispositif de montage servant au montage, sur une moto, d'un premier radiateur et d'un second radiateur de type identique, où le dispositif de montage présente un corps de base (2) ayant une première ouverture qui peut être traversée par un premier élément de fixation au moyen duquel le premier radiateur et le corps de base peuvent être fixés sur un point de fixation, où un deuxième élément de fixation (4) est disposé, sur le corps de base, en étant espacé de la première ouverture, deuxième élément de fixation au moyen duquel le second radiateur peut être fixé de façon contiguë par rapport au premier radiateur, **caractérisé en ce que** le deuxième élément de fixation (4) est un boulon ou un boulon fileté ou une vis, où le deuxième élément de fixation est assemblé avec le corps de base ou bien configuré en formant une seule et même pièce avec le corps de base, où un évidement (5) est prévu sur le corps de base, en étant placé entre la première ouverture et le deuxième élément de fixation, lequel évidement réduit localement la section du corps de base (2).

2. Dispositif de montage selon la revendication 1, **caractérisé en ce que** l'évidement (5) s'étend à partir d'un bord latéral du corps de base, en direction d'un bord latéral opposé du corps de base.

3. Dispositif de montage selon la revendication 1 ou 2, **caractérisé en ce que** l'évidement est configuré en étant de forme pratiquement semi-circulaire.

4. Moto comprenant un dispositif de montage servant au montage d'un premier radiateur et d'un second radiateur de type identique, où la moto présente un point de fixation servant à la fixation d'un premier radiateur où, au moyen du dispositif de montage selon l'une quelconque des revendications 1 à 3, un second radiateur peut être fixé sur le point de fixation, où le dispositif de montage présente un corps de base (2) ayant une première ouverture (3) qui peut être traversée par un premier élément de fixation au moyen duquel le premier radiateur et le corps de base peuvent être fixés sur le point de fixation, où un deuxième élément de fixation est disposé, sur le corps de base (2), en étant espacé de la première ouverture, deuxième élément de fixation au moyen duquel le second radiateur peut être fixé de façon contiguë par rapport au premier radiateur.

5. Moto selon la revendication 4, **caractérisée en ce qu'**il est prévu deux points de fixation, où le premier radiateur est fixé sur les deux points de fixation, et **en ce qu'**il est prévu deux dispositifs de montage qui sont fixés respectivement sur les points de fixation, où un second radiateur est fixé sur les deux dispositifs de montage.

6. Moto selon la revendication 4 ou 5, **caractérisée en ce que** le premier radiateur et le second radiateur sont disposés en étant placés l'un au-dessous de l'autre.

7. Moto selon l'une quelconque des revendications précédentes 4 à 6, **caractérisée en ce que** le dispositif de montage au moins au nombre de un est disposé en aval des radiateurs dans la direction d'écoulement de l'air.
